(19) Europäisches Patentamt
European Patent Office
Office européen des brevets

(11) EP 1 034 831 A2

(12) # EUROPÄISCHE PATENTANMELDUNG

(43) Veröffentlichungstag:
**13.09.2000 Patentblatt 2000/37**

(51) Int. Cl.[7]: **B01D 53/94**

(21) Anmeldenummer: **00100785.5**

(22) Anmeldetag: **15.01.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **06.03.1999 DE 19909933**

(71) Anmelder: **DaimlerChrysler AG**
**70567 Stuttgart (DE)**

(72) Erfinder:
- **Günther, Josef**
  **71563 Affalterbach (DE)**
- **Konrad, Brigitte**
  **89134 Blaustein (DE)**
- **Krutsch, Bernd, Dr.**
  **73770 Denkendorf (DE)**
- **Nolte, Arno**
  **70374 Stuttgart (DE)**
- **Voigtländer, Dirk, Dr.**
  **70825 Korntal-Münchingen (DE)**
- **Weibel, Michel, Dr.**
  **70619 Stuttgart (DE)**
- **Weirich, Marko**
  **70374 Stuttgart (DE)**
- **Wenninger, Günter**
  **70599 Stuttgart (DE)**

(54) **Abgasreinigungsanlage mit interner Ammoniakerzeugung zur Stickoxidreduktion und Betriebsverfahren hierfür**

(57) Die Erfindung bezieht sich auf eine Abgasreinigungsanlage mit einem Ammoniakerzeugungskatalysator zur Erzeugung von Ammoniak aus im zu reinigenden Abgas enthaltenen Stickoxiden und einem stromabwärts desselben angeordneten Stickoxidreduktionskatalysator zur Reduktion von im zu reinigenden Abgas enthaltenen Stickoxiden unter Verwendung des erzeugten Ammoniaks als Reduktionsmittel sowie auf ein Betriebsverfahren hierfür.

Erfindungsgemäß ist ein stromaufwärts des Ammoniakerzeugungskatalysators angeordneter Stickoxidadsorptionskatalysator vorgesehen, und/oder der Ammoniakerzeugungskatalysator ist in einem Abgasleitungszweig angeordnet, der nur zu einem Teil von mehreren, getrennt steuerbaren Verbrennungsquellen gehört, während den übrigen Verbrennungsquellen ein oder mehrere weitere, unter Umgehung des Ammoniakerzeugungskatalysators zum Stickoxidreduktionskatalysator führende Abgasleitungszweige zugeordnet sind. Der zum Abgasleitungszweig des Ammoniakerzeugungskatalysators gehörige Teil der Verbrennungsquellen wird kontinuierlich oder zeitweise fett betrieben, und/oder die einen oder mehreren, ihr Abgas dem Stickoxidadsorptionskatalysator zuführenden Verbrennungsquellen werden abwechselnd mager und fett betrieben.

Verwendung z.B. für mager betriebene Otto- und Dieselmotoren in Kraftfahrzeugen.

Fig. 1
3d
2d
2c
2b
2a
3c
3b
3a
λ > 1
3e
3
6
4
5
1
Zyklen : λ>1 , λ<1
oder kontinuierlich λ<1

**Beschreibung**

Die Erfindung bezieht sich auf eine Abgasreinigungsanlage mit einem Ammoniakerzeugungskatalysator zur Erzeugung von Ammoniak aus im zu reinigenden Abgas enthaltenen Stickoxiden und einem stromabwärts desselben angeordneten Stickoxidreduktionskatalysator zur Reduktion von im zu reinigenden Abgas enthaltenen Stickoxiden unter Verwendung des erzeugten Ammoniaks als Reduktionsmittel sowie auf ein Verfahren zum Betrieb einer solchen Abgasreinigungsanlage.

Abgasreinigungsanlagen dieser Art und Betriebsverfahren hierfür sind in der Offenlegungsschrift WO 97/17532 A1 beschrieben und dienen insbesondere zur Reinigung des Abgases eines vorzugsweise mehrzylindrigen Kraftfahrzeug-Verbrennungsmotors. Das Abgas jedes Zylinders wird über einen kurzen Abgasanschluß einer gemeinsamen Abgasleitung zugeführt, in der sich sämtliche abgasreinigenden Komponenten befinden.

In einer der dort angegebenen Realisierungen sind ein Ammoniakerzeugungskatalysator in Form eines Dreiwege-Katalysators, ein Stickoxidadsorptionskatalysator, der gleichzeitig als Stickoxidreduktionskatalysator fungiert, und ein Ammoniakumsetzungskatalysator seriell in Abgasströmungsrichtung hintereinandergeschaltet. Der Motor wird zeitlich abwechselnd mit fettem, d.h. kraftstoffreichem, und magerem, d.h. kraftstoffarmem, Brennstoff/Luft-Gemisch betrieben. In den Magerbetriebsphasen werden die Stickoxide im Stickoxidadsorptionskatalysator zwischengespeichert. In den Fettbetriebsphasen wird aus den im Abgas enthaltenen Stickoxiden vom Ammoniakerzeugungskatalysator Ammoniak erzeugt, der dann eine Stickoxidreduktion im anschließenden Stickoxidadsorptionskatalysator unter Desorption der dort zuvor adsorbierten Stickoxide bewirkt. Gegebenenfalls überschüssiger Ammoniak wird im nachfolgenden Ammoniakumsetzungskatalysator abgebaut.

In einer weiteren Realisierung ist statt des Stickoxidadsorptionskatalysators ein Ammoniakadsorptionskatalysator vorgesehen, der gleichzeitig als Stickoxidreduktionskatalysator fungiert. In den Fettbetriebsphasen wird der vom Ammoniakerzeugungskatalysator erzeugte Ammoniak im Ammoniakadsorptionskatalysator zwischengespeichert. In den Magerbetriebsphasen werden die im Abgas enthaltenen Stickoxide unter Desorption des Ammoniaks im Ammoniakadsorptionskatalysator reduziert.

In noch einer weiteren Realisierung sind zwischen dem Ammoniakerzeugungskatalysator und dem Ammoniakumsetzungskatalysator seriell sowohl der Stickoxidadsorptionskatalysator als auch der Ammoniakadsorptionskatalysator vorgesehen. In den Magerbetriebsphasen werden die im Abgas enthaltenen Stickoxide im Stickoxidadsorptionskatalysator zwischengespeichert. Dort gegebenenfalls nicht mehr adsorbierte Stickoxide werden im anschließenden Ammoniakadsorptionskatalysator unter Desorption von Ammoniak reduziert. In den Fettbetriebsphasen erzeugt der Ammoniakerzeugungskatalysator aus den im Abgas enthaltenen Stickoxiden Ammoniak, der im anschließenden Stickoxidadsorptionskatalysator eine Desorption und Reduktion zwischengespeicherter Stickoxide bewirkt. Gegebenenfalls überschüssiger Ammoniak wird im anschließenden Ammoniakadsorptionskatalysator zwischengespeichert. In allen Realisierungen wird aus Kraftstoffverbrauchsgründen angestrebt, den Motor jeweils möglichst lange im Magerbetrieb fahren zu können.

Der Erfindung liegt als technisches Problem die Bereitstellung einer Abgasreinigungsanlage der eingangs genannten Art und eines Betriebsverfahrens hierfür zugrunde, mit denen im Abgas enthaltene Stickoxide durch intern erzeugten Ammoniak möglichst effektiv und so umgesetzt werden können, daß die eine oder mehreren Verbrennungsquellen, die das zu reinigende Abgas erzeugen, möglichst brennstoffverbrauchsgünstig betrieben werden können.

Die Erfindung löst dieses Problem durch die Bereitstellung einer Abgasreinigungsanlage mit den Merkmalen des Anspruchs 1 oder 2 sowie eines Betriebsverfahrens hierfür mit den Merkmalen des Anspruchs 4 oder 6.

Die Abgasreinigungsanlage nach Anspruch 1 eignet sich speziell zur Reinigung des Abgases von wenigstens zwei getrennt steuerbaren Gruppen von je einer oder mehreren Verbrennungsquellen, wobei wenigstens einer ersten Gruppe ein eigener Abgasleitungszweig parallel zu dem oder den übrigen Abgasleitungszweigen der anderen Gruppen zugeordnet ist und alle Abgasleitungszweige gemeinsam zum Stickoxidreduktionskatalysator führen. Der Ammoniakerzeugungskatalysator ist charakteristischerweise in dem zu der ersten Verbrennungsquellengruppe gehörigen Abgasleitungszweig angeordnet und daher nur vom Abgasteilstrom dieser Verbrennungsquellengruppe beaufschlagt. Die übrigen Verbrennungsquellen können daher unabhängig von den Anforderungen des Ammoniakerzeugungskatalysators betrieben werden. Andererseits kann der Betrieb der zum Ammoniakerzeugungskatalysator gehörigen Verbrennungsquellengruppe speziell auf dessen Anforderungen abgestellt werden.

Die Abgasreinigungsanlage nach Anspruch 2 weist neben dem Ammoniakerzeugungs- und dem Stickoxidreduktionskatalysator zusätzlich einen Stickoxidadsorptionskatalysator auf, der charakteristischerweise stromaufwärts des Ammoniakerzeugungskatalysators angeordnet ist. Damit können die in Magerbetriebsphasen der Verbrennungsquellen vermehrt im Abgas enthaltenen Stickoxide im Stickoxidadsorptionskatalysator zwischengespeichert und in einer jeweils anschließenden Fettbetriebsphase desorbiert und im nachgeschalteten Ammoniakerzeugungskatalysator wenigstens teilweise zur Ammoniakerzeugung genutzt werden.

Eine vorteilhafte Weiterbildung der Erfindung nach Anspruch 3 kombiniert die Maßnahmen der Ansprüche 1 und 2 dahingehend, daß in einem Abgasleitungszweig, der zu einer von mehreren Verbrennungsquellengruppen gehört, ein Stickoxidadsorptionskatalysator und ein Ammoniakerzeugungskatalysator hintereinandergeschaltet sind, wobei dieser Abgasleitungszweig zusammen mit einem oder mehreren, zu den übrigen Verbrennungsquellen gehörenden Abgasleitungszweigen zum Stickoxidreduktionskatalysator führt.

Das Betriebsverfahren nach Anspruch 4 eignet sich zum Betrieb der Anlage nach Anspruch 1 oder 3 und sieht vor, die Verbrennungsquellengruppe, deren Abgasteilstrom den Ammoniakerzeugungskatalysator und optional den vorgeschalteten Stickoxidadsorberkatalysator beaufschlagt, kontinuierlich oder wenigstens zeitweise im Fettbetrieb zu betreiben. Dies gewährleistet die Bildung einer ausreichenden Ammoniakmenge, um im anschließenden Stickoxidreduktionskatalysator auch die im Abgas der übrigen Verbrennungsquellen enthaltenen Stickoxide unter Nutzung des Ammoniaks als Reduktionsmittel reduzieren zu können.

In einer Weiterbildung dieses Verfahrens werden gemäß Anspruch 5 die eine oder mehreren übrigen Verbrennungsquellen, deren Abgas den Ammoniakerzeugungskatalysator umgeht, kontinuierlich im Magerbetrieb gefahren, um den Brennstoffverbrauch insgesamt möglichst niedrig zu halten.

Das Betriebsverfahren nach Anspruch 6 eignet sich zum Betrieb der Anlage nach Anspruch 2 oder 3 und sieht speziell vor, die eine oder mehreren Verbrennungsquellen, deren Abgas den Stickoxidadsorptionskatalysator beaufschlagt, periodisch abwechselnd im Magerbetrieb und Fettbetrieb zu betreiben. Die einzelnen Betriebsphasen können dabei insbesondere so gesteuert werden, daß einerseits der Brennstoffverbrauch möglichst gering bleibt und andererseits stets ausreichend Ammoniak als Reduktionsmittel zur Stickoxidreduktion bereitgestellt wird.

Eine vorteilhafte Ausführungsform der Erfindung ist in der Zeichnung dargestellt und wird nachfolgend beschrieben. Hierbei zeigen:

Fig. 1 ein schematisches Blockdiagramm eines mehrzylindrigen Verbrennungsmotors mit zugehöriger Abgasreinigungsanlage mit Abgasteilstrom-Ammoniakerzeugung und

Fig. 2 ein Blockdiagramm entsprechend Fig. 1, jedoch für eine Variante mit Abgasgesamtstrom-Ammoniakerzeugung.

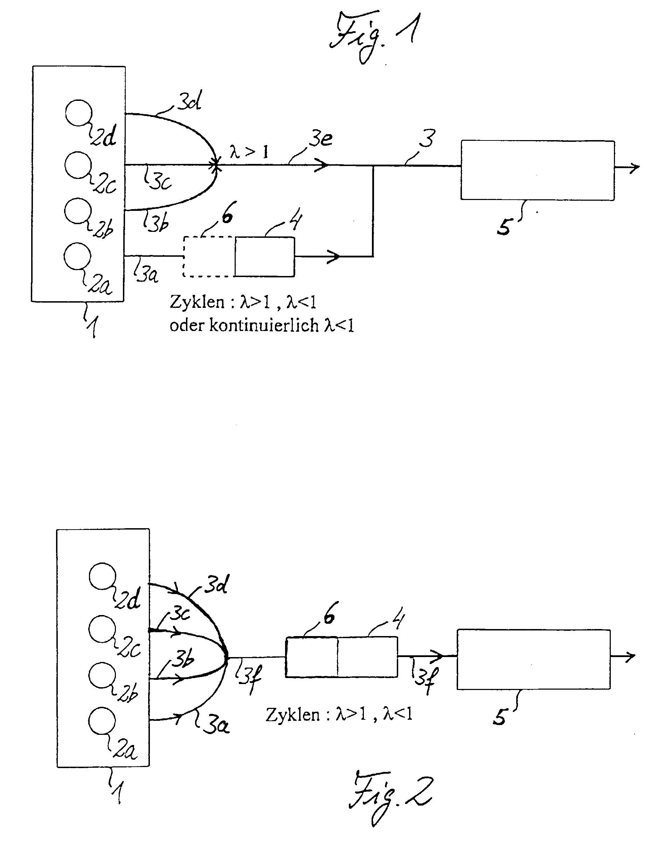

Der in Figur 1 dargestellte Verbrennungsmotor 1 kann speziell ein magerbetriebsfähiger Verbrennungsmotor eines Kraftfahrzeugs sein und weist beispielhaft vier Zylinder und damit Brennräume 2a bis 2d als Verbrennungsquellen auf. Von jedem Brennraum 2a bis 2d geht ein eigener Abgasleitungszweig 3a bis 3d ab. Dabei befindet sich in einem ersten Abgasleitungszweig 3a, der einem ersten Brennraum 2a zugeordnet ist, ein Ammoniakerzeugungskatalysator 4, während sich die drei übrigen Abgasleitungszweige 3b, 3c, 3d nach kurzer Länge zu einem gemeinsamen Abgasleitungszweig 3e vereinigen, der sich seinerseits mit dem ersten Abgasleitungszweig 3a zu einem gemeinsamen Abgasleitungsabschnitt 3 vereinigt, in welchem ein Stickoxidreduktionskatalysator 5 angeordnet ist. Die Abgasströmungsrichtung ist mit jeweiligen Pfeilen symbolisiert. Optional ist im ersten Abgasleitungszweig 3a ein gestrichelt gezeichneter Stickoxidadsorptionskatalysator 6 vorgesehen, und zwar stromaufwärts des Ammoniakerzeugungskatalysators 4. Geeignete Konstruktionen und Katalysatormaterialien für die drei Katalysatoren 4, 5, 6 sind dem Fachmann an sich bekannt und bedürfen hier keiner näheren Erläuterung. Insbesondere kann der Ammoniakerzeugungskatalysator 4 von einem Dreiwege-Katalysator oder einem anderen geeigneten Katalysator gebildet sein, der die Reaktion

$$5/2 \cdot H_2 + NO \rightarrow NH_3 + H_2O$$

favorisiert, mit der intern Ammoniak aus im Abgas enthaltenen Stickoxiden und Wasserstoff synthetisiert wird.

Der beschriebene Aufbau hat zur Folge, daß der Ammoniakerzeugungskatalysator 4 und der optional vorgeschaltete Stickoxidadsorptionskatalysator 6 nur vom Abgas des ersten Brennraums 2a über den ersten Abgasleitungszweig 3a beaufschlagt werden, während das Abgas der übrigen Brennräume 2b, 2c, 2d über die übrigen Abgasleitungszweige 3b, 3c, 3d diese beiden Katalysatoren 4, 6 umgeht und direkt zum Stickoxidreduktionskatalysator 5 gelangt. Durch die unterschiedliche Steuerbarkeit der Brennräume 2a bis 2d speziell des ersten Brennraums 2a einerseits und der übrigen Brennräume 2b, 2c, 2d andererseits läßt sich die Abgasreinigungsanlage in vorteilhafter Weise wie folgt betreiben.

Der erste Zylinder bzw. Brennraum 2a des Motors wird periodisch abwechselnd mager und fett betrieben, d.h. abwechselnd mit einem Luft/Kraftstoff-Verhältnis $\lambda$ über bzw. unter dem stöchiometrischen Wert eins. In den Magerbetriebsphasen, in denen der Kraftstoffverbrauch relativ gering ist, entstehen vermehrt Stickoxide im Abgas dieses Brennraums 2a, die im Stickoxidadsorptionskatalysator 6 zwischengespeichert werden. In den Fettbetriebsphasen werden die dort zwischengespeicherten Stickoxide desorbiert und gelangen zum nachgeschalteten Ammoniakerzeugungskatalysator 4, der sie unter Verwendung von im Abgas des fett betriebenen ersten Brennraums 2a enthaltenem Wasserstoff zur Ammoniakerzeugung nutzt. Der erzeugte Ammoniak steht dann im nachfolgenden Stickoxidreduktionskatalysator 5 als Reduktionsmittel zur Reduktion der insbesondere im Abgas der drei übrigen Brennräume 2b, 2c, 2d enthaltenen Stickoxide zur Verfügung. Im allgemeinen reicht die aus dem Abgasteilstrom des ersten Brennraums 2a gewonnene Ammoniakmenge aus, um alle zum Stickoxidreduktionskatalysator 5 gelangenden Stickoxide dort vollständig zu reduzieren, selbst wenn die drei übrigen Brennräume 2b, 2c, 2d kontinuierlich mager, d.h. mit $\lambda>1$, betrieben werden. Der kontinuierliche Magerbetrieb der drei übrigen Brennräume 2b, 2c, 2d ist daher zwecks Minimierung des Kraftstoffverbrauchs bevorzugt. Alternativ kann ein zeitweiser Fettbetrieb der drei übrigen Brennräume 2b, 2c, 2d vorgesehen sein.

Alternativ zum abwechselnden Fett- und Magerbetrieb kann der erste Brennraum 2a kontinuierlich fett betrieben werden, insbesondere wenn der optionale Stickoxidadsorptionskatalysator 6 nicht vorgesehen ist. In jedem Fall favorisiert der Ammoniakerzeugungskatalysator 4 während des fetten Betriebs des zugehörigen ersten Brennraums 2a die Ammoniaksynthesereaktion

$$5/2 \cdot H_2 + NO \rightarrow NH_3 + H_2O$$

aus den im fetten Abgas enthaltenen Stickoxiden und dem im fetten Abgas vermehrt vorhandenen Wasserstoff.

Es versteht sich, daß Modifikationen der oben beschriebenen Abgasreinigungsanlage und der erläuterten Betriebsverfahren hierfür möglich sind. So eignet sich die Erfindung nicht nur für mager betriebene Otto- oder Dieselmotoren von Kraftfahrzeugen, sondern für beliebige Verbrennungsquellen, deren Abgas von enthaltenen Stickoxiden gereinigt werden soll. Statt der gezeigten Aufteilung von vier Verbrennungsquellen in Form der Brennräume 2a bis 2d in eine dem Ammoniakerzeugungskatalysator 4 zugeordnete Verbrennungsquelle einerseits und die anderen drei Verbrennungsquellen andererseits, deren Abgas unter Umgehung des Ammoniakerzeugungskatalysators 4 direkt zum Stickoxidreduktionskatalysator 5 geleitet wird, ist jede andere Aufteilung in eine Gruppe aus einer oder mehreren Verbrennungsquellen, deren Abgas über einen zugehörigen Abgasleitungszweig dem Ammoniakerzeugungskatalysator zugeführt wird, und eine oder mehrere weitere Gruppen von je einem oder mehreren weiteren Verbrennungsquellen möglich, deren Abgas den Ammoniakerzeugungskatalysator umgeht.

Als weitere Alternative kann vorgesehen sein, das Abgas aller Verbrennungsquellen über eine gemeinsame Abgasleitung zu führen, in welcher der Ammoniakerzeugungskatalysator und der nachgeschaltete Stickoxidreduktionskatalysator sowie optional der dem Ammoniakerzeugungskatalysator vorgeschaltete Stickoxidadsorptionskatalysator angeordnet sind. Auch in diesem Fall wird wenigstens ein Teil der Verbrennungsquellen zeitweise oder kontinuierlich fett betrieben, um eine ausreichende interne Ammoniakerzeugung im Ammoniakerzeugungskatalysator zu gewährleisten. Eine derartige Anlage ist in Fig. 2 dargestellt, wobei der Einfachheit halber funktionell gleiche Komponenten wie in der Anlage von Fig. 1 mit denselben Bezugszeichen versehen sind, so daß insoweit auf deren obige Beschreibung zu Fig. 1 verwiesen werden kann. Als einziger wesentlicher Unterschied zur Anlage von Fig. 1 münden bei der Anlage von Fig. 2 alle vier Abgasleitungszweige 3a bis 3d in einer gemeinsamen Abgasleitung 3f, in der sich seriell hintereinandergeschaltet der Stickoxidadsorptionskatalysator 6, der Ammoniakerzeugungskatalysator 4 und der Stickoxidreduktionskatalysator 5 befinden.

**Patentansprüche**

**1.** Abgasreinigungsanlage zur Reinigung des Abgases mehrerer, getrennt steuerbarer Verbrennungsquellen (2a bis 2d), insbesondere für einen mehrzylindrigen Kraftfahrzeug-Verbrennungsmotor, mit

- einem Ammoniakerzeugungskatalysator (4) zur Erzeugung von Ammoniak aus im zu reinigenden Abgas enthaltenen Stickoxiden und
- einem stromabwärts des Ammoniakerzeugungskatalysators angeordneten Stickoxidreduktionskatalysator (5) zur Reduktion von im zu reinigenden Abgas enthaltenen Stickoxiden unter Verwendung des im Ammoniakerzeugungskatalysator erzeugten Ammoniaks als Reduktionsmittel,

**dadurch gekennzeichnet, daß**

- der Ammoniakerzeugungskatalysator (4) in einem zu einem ersten Teil (2a) der Verbrennungsquellen (2a bis 2d) gehörigen Abgasleitungszweig (3a) angeordnet ist, der zum Stickoxidreduktionskatalysator (5) führt, während den übrigen Verbrennungsquellen (2b bis 2d) ein oder mehrere weitere Abgasleitungszweige (3b, 3c, 3d) zugeordnet sind, die unter Umgehung des Ammoniakerzeugungskatalysators zum Stickoxidreduktionskatalysator führen.

**2.** Abgasreinigungsanlage, insbesondere für einen Kraftfahrzeug-Verbrennungsmotor, mit

- einem Ammoniakerzeugungskatalysator (4) zur Erzeugung von Ammoniak aus im zu reinigenden Abgas enthaltenen Stickoxiden,
- einem stromabwärts des Ammoniakerzeugungskatalysators angeordneten Stickoxidreduktionskatalysator (5) zur Reduktion von im zu reinigenden Abgas enthaltenen Stickoxiden unter Verwendung des im Ammoniakerzeugungskatalysator erzeugten Ammoniaks als Reduktionsmittel und

- einem Stickoxidadsorptionskatalysator (6) zur Zwischenspeicherung von im zu reinigenden Abgas enthaltenen Stickoxiden,
**dadurch gekennzeichnet, daß**
- der Stickoxidadsorptionskatalysator (6) stromaufwärts des Ammoniakerzeugungskatalysators (4) angeordnet ist.

**3.** Abgasreinigungsanlage nach Anspruch 2, weiter **dadurch gekennzeichnet, daß** sie zur Reinigung des Abgases mehrerer, getrennt steuerbarer Verbrennungsquellen dient und der Ammoniakerzeugungskatalysator (4) sowie der diesem vorgeschaltete Stickoxidadsorptionskatalysator (6) in einem zu einem ersten Teil (2a) der Verbrennungsquellen gehörigen Abgasleitungszweig (3a) angeordnet sind, der zum Stickoxidreduktionskatalysator (5) führt, während den übrigen Verbrennungsquellen (2b, 2c, 2d) ein oder mehrere weitere Abgasleitungszweige (3b, 3c, 3d) zugeordnet sind, die unter Umgehung des Ammoniakerzeugungskatalysators und des Stickoxidadsorptionskatalysators zum Stickoxidreduktionskatalysator (5) führen.

**4.** Verfahren zum Betrieb einer Abgasreinigungsanlage nach Anspruch 1 oder 3, **dadurch gekennzeichnet, daß** der zum Abgasleitungszweig (3a) des Ammoniakerzeugungskatalysators (4) gehörige Teil (2a) der Verbrennungsquellen kontinuierlich oder zeitweise mit einem fetten Brennstoff/Luft-Gemisch betrieben wird.

**5.** Verfahren nach Anspruch 4, weiter **dadurch gekennzeichnet, daß** die übrigen nicht zum Abgasleitungszweig (3a) des Ammoniakerzeugungskatalysators (4) gehörigen Verbrennungsquellen (2b, 2c, 2d) kontinuierlich mit einem mageren Brennstoff/Luft-Gemisch betrieben werden.

**6.** Verfahren zum Betrieb einer Abgasreinigungsanlage nach Anspruch 2 oder 3, **dadurch gekennzeichnet, daß** die eine oder mehreren, zum Abgasleitungszweig (3a) des Stickoxidadsorptionskatalysators (6) gehörigen Verbrennungsquellen (2a) in aufeinanderfolgenden Zeitintervallen abwechselnd mit einem fetten und einem mageren Brennstoff/Luft-Gemisch betrieben werden, wobei der Stickoxidadsorptionskatalysator in Magerbetriebsphasen im zugeführten Abgas enthaltene Stickoxide adsorbiert, während in Fettbetriebesphasen die dort zwischengespeicherten Stickoxide desorbiert und wenigstens teilweise im nachgeschalteten Ammoniakerzeugungskatalysator zur Ammoniakerzeugung genutzt werden.

Fig. 1
3d
2d
2c
3c
2b
3b
2a
3a
λ > 1
3e
3
6
4
5
1
Zyklen : λ>1 , λ<1
oder kontinuierlich λ<1

2d
3d
2c
3c
2b
3b
2a
3a
3f
6
4
3f
5
1
Zyklen : λ>1 , λ<1
Fig. 2